Europäisches Patentamt

European Patent Office

Office européen des brevets

(11) Veröffentlichungsnummer: **0 158 939**
**A1**

## (12) EUROPÄISCHE PATENTANMELDUNG

(21) Anmeldenummer: **85104139.2**

(22) Anmeldetag: **04.04.85**

(51) Int. Cl.⁴: **G 01 F 3/22**

(30) Priorität: **17.04.84 DE 3414431**

(43) Veröffentlichungstag der Anmeldung:
**23.10.85 Patentblatt 85/43**

(84) Benannte Vertragsstaaten:
**AT BE CH FR GB IT LI LU NL SE**

(71) Anmelder: **Johann Baptist Rombach GmbH & Co KG**
**Hardeckstrasse 2**
**D-7500 Karlsruhe 21(DE)**

(72) Erfinder: **Schuhbaum, Ludwig Heinz**
**Gondelsheimer Strasse 18**
**D-7500 Karlsruhe 1(DE)**

(74) Vertreter: **Durm, Klaus, Dr.-Ing.**
**Felix-Mottl-Strasse 1a**
**D-7500 Karlsruhe 21(DE)**

(54) Gasbalgenzähler.

(57) Die Erfindung betrifft einen Gasbalgenzähler mit zwei Meßkammern 1, in welchem eine zwei Meßräume 20, 23 abteilende Membran 2 angeordnet ist. Die Meßkammern 1 sind schalenförmig ausgebildet und tragen an ihrer Innenseite eine Auflageschulter 10 für die Membran 2 und sie stoßen mit ihren Schalenrändern 11 unter Einschluß einer Trennwand 13 stumpf aneinander. Ein Klemmring 5, der auf der Trennwand 13 aufsteht, drückt die Membran 2 auf die Auflageschulter 10. An jede Meßkammer ist ein Schieberstutzen 7 angeformt, auf dessen Gleitfläche 26 sich der Muschelschieber 8 bewegt.

EP 0 158 939 A1

R 3297/85-EU

0158939

## Gasbalgenzähler

Die Erfindung betrifft einen Gasbalgenzähler mit zwei kreiszylindrischen, durch eine kreisförmige Trennwand voneinander getrennten Meßkammern, die an ihren Innenseiten jeweils eine kreisförmige Auflageschulter aufweisen, an welchen jeweils eine an einem Membranteller befestigte Membran mit ihrem Außenrand mittels eines Klemmrings angepreßt ist, sowie mit einem an den Membrantellern angreifenden und mit einem Zählwerk gekoppelten Hebelsystem und einer von diesem betätigten Schiebesteuerung mit zwei Muschelschiebern, die sich über den Mündungen von in die Meßkammern führenden Kanälen für das zu- und abströmende Gas hin- und herbewegen.

Die Erfindung findet insbesondere Anwendung bei Gaszählern zur Messung des Gasverbrauches von Haushalten, wie sie für diesen Zweck in sehr großen Stückzahlen hergestellt und eingesetzt werden.

Wegen der hohen, seitens der Gasversorgungsunternehmen gestellten Anforderungen an die Meßgenauigkeit der in

0158939

Haushalten eingesetzten Gaszähler ist deren Herstellung relativ aufwendig und teuer. Eine hohe Fertigungsgenauigkeit ist unumgänglich und ein beträchtlicher Zeitaufwand für die Justierung läßt sich kaum vermeiden.

Es ist ein einstückiger Gaszählerbauteil für einen schiebergesteuerten Trockengaszähler bekannt, der als Spritzteil aus glaskugelverstärktem Kunststoff hergestellt ist. Dieses Bauteil erfordert eine komplizierte, aufwendige Spritzform und es bedarf besonderer Vorkehrungen, daß ein die Meßgenauigkeit beeinträchtigendes Verziehen vermieden wird (Deutsche Offenlegungsschrift 27 56 163).

Es ist weiterhin ein Gasbalgenzähler bekannt geworden, welcher zwei zylindrische, Rücken an Rücken liegende und durch eine Trennwand voneinander getrennte Meßkammern aufweist, die in einem gemeinsamen Gehäuse untergebracht sind. Am Kopf des Gehäuses ist ein die Kanäle für das zu- und abströmende Gas, ein Zählwerk sowie ein Hebelsystem tragender Kasten angeformt, auf welchem die Steuerschieber gleiten. Auch dieses Gehäuse bedingt eine sehr genaue und daher aufwendige Herstellung; darüber hinaus sind spezielle Maßnahmen zur Einhaltung der Fertigungstoleranzen und zur Justierung des Gerätes unumgänglich. (US-Patentschrift 2 741 122).

Zur Verbilligung der Herstellung eines Gasbalgenzählers ist schon vorgeschlagen worden, das Gehäuse für die Meßkammern aus mehreren, aus einem elastischen Kunststoff gefertigten Teilen zusammenzusetzen und diese mittels angeformter Schnappverbindungen miteinander zu verbinden. Dieses Gerät ist zwar relativ preiswert herstellbar, jedoch ist seine Konstruktion nicht in der Lage, die geforderten Meßgenauigkeiten einzuhalten. (Britische Patentschrift 1 334 842).

0158939

Die Aufgabe der vorliegenden Erfindung wird darin gesehen, die Herstellung eines Gasbalgenzählers zu vereinfachen und die Fertigungsgenauigkeit im Hinblick auf eine Erleichterung der Justierung zu erhöhen sowie die Montage soweit zu vereinfachen, daß sie gegebenenfalls durch Montageroboter ausgeführt werden kann.

Zur Lösung der gestellten Aufgabe wird von einem Gasbalgenzähler der eingangs erwähnten Bauart ausgegangen und gelöst wird die Aufgabe dadurch, daß die beiden Meßkammern jeweils die Form einer niederen, kreiszylindrischen Schale besitzen, daß die beiden Meßkammern an ihren Schalenrändern stumpf aneinanderstoßend lösbar miteinander verbunden sind, daß die Trennwand zwischen den beiden Meßkammern an den Schalenrändern beiderseits abdichtend aufsitzt, daß der Klemmring konisch ausgebildet ist und an seiner der Trennwand zugewandten Seite Stege aufweist, die auf der Trennwand aufliegen.

Die hiermit vorgeschlagene Ausbildung der Meßkammern als zwei kreiszylindrische Schalen ermöglicht die Einhaltung geringer Toleranzen bei der Herstellung, was eine höhere Meßgenauigkeit bei reduzierten Justierarbeiten nach sich zieht. Sehr einfach sind die Befestigung der Membran durch den konischen Klemmring sowie die gasdichte Trennung der beiden Meßkammern mittels der Trennwand. Von besonderem Vorteil ist, daß bei der Vorrichtung nur noch eine einzige kreisförmige Dichtstelle - nämlich dort wo die Schalenränder zusammenstoßen - vorhanden ist, die leicht beherrscht werden kann. Die Montage ist denkbar einfach und läßt einen maschinell durchgeführten Zusammenbau zu.

0158939

Zweckmäßig trägt die Trennwand an ihrem Rand eine im Querschnitt U-förmige Ringdichtung. Eine solche Dichtung bewirkt mit geringem Aufwand ein sicheres Abdichten beider Meßkammern zugleich sowohl gegeneinander wie nach außen.

In einer die Montage erleichternden Ausgestaltung der Erfindung weist die Membran einen kreisförmigen Innenrand auf, und von der Oberfläche des Membrantellers stehen Nasen ab, die einen Ring bilden auf welchem der Membran-Innenrand sitzt, weiterhin weist jede Nase einen zum Membran-Innenrand weisenden Haken auf und zur Befestigung der Membran ist ein über die Haken streifbarer Haltering vorgesehen. Diese Befestigung der Membran mit Hilfe einer Schnappverbindung ist zuverlässig und kann durch eine einfache, elektronisch gesteuerte Vorrichtung oder pneumatisch ausgeführt werden.

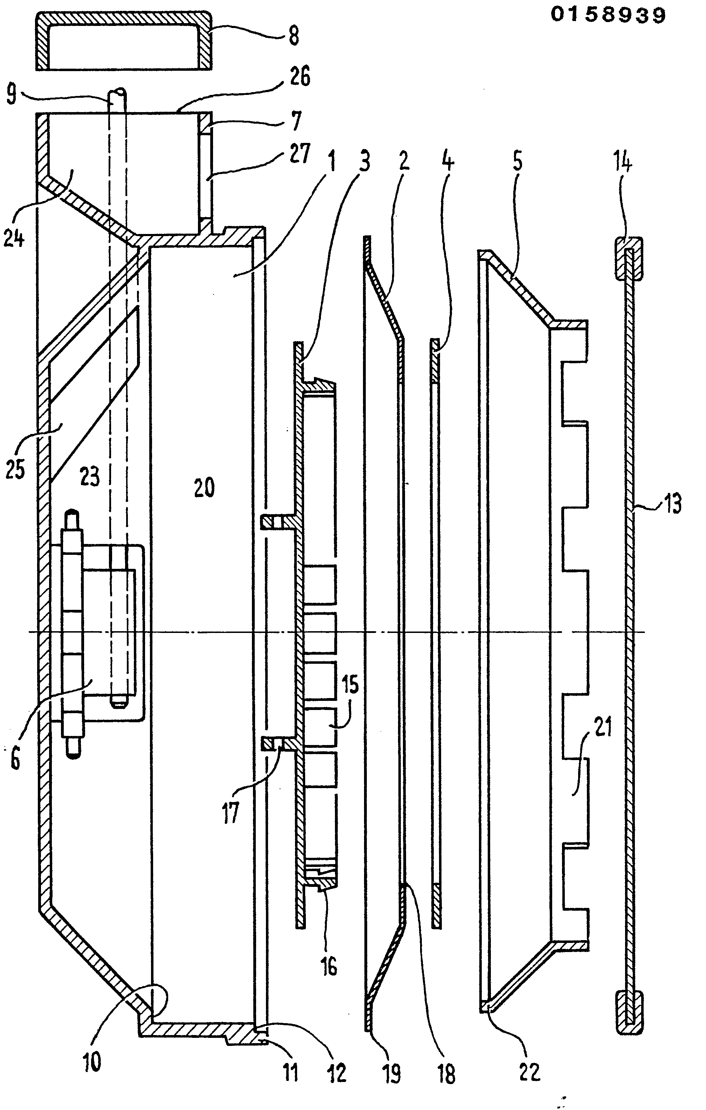

Die Erfindung wird nachstehend an einem Ausführungsbeispiel unter Bezugnahme auf die beigefügte Zeichnung näher erläutert. Die Zeichnung zeigt eine Meßkammer eines Gasbalgenzählers in einem Schnitt, die Teile explosionsartig auseinander gezogen. Die Darstellung stellt den Gegenstand vereinfacht und in ungefähr natürlicher Größe dar.

Ein Gasbalgenzähler besitzt zwei gleich ausgebildete, nebeneinander liegende Meßkammern, von welchen die eine Meßkammer 1 in der Zeichnung dargestellt ist.

- 5 -

Diese Meßkammer 1 kann aus Metall oder einem geeigneten Kunststoff einstückig mittels eines Gieß- oder Preßverfahrens hergestellt sein.

Im Innern der Meßkammer 1 befindet sich eine Membran 2, ein Membranteller 3, ein Haltering 4, ein Klemmring 5 sowie ein Schwenkarm 6. An die Meßkammer 1 ist ein Schieberstutzen 7 angeformt, auf dem sich ein Muschelschieber 8 bewegt.

Der Schwenkarm 6, welcher die Bewegung des Membrantellers 3 über eine Schiebersteuerung und ein Kurbelgetriebe auf ein Zählwerk sowie auf den Muschelschieber 8 überträgt, ist in der Meßkammer 1 an einer Schwenkwelle 9 drehbar befestigt. (Schiebersteuerung, Zählwerk und Kurbelgetriebe sind in der Zeichnung nicht dargestellt.)

Die Meßkammer 1 besitzt die Form einer niederen, flachen Schale, die kreiszylindrisch ausgebildet ist. Diese Meßkammer 1 weist an ihrer Innenseite eine rundumlaufende, kreisringförmige Auflageschulter 10 auf, die etwa in halber Tiefe der Schale angeordnet ist. Am Schalenrand 11 der Meßkammer 1 befindet sich innen ein ringsum laufender Absatz 12.

Die beiden Meßkammern 1 des neuerungsgemäßen Gaszählers sind lösbar (z.B. mittels Schrauben) miteinander verbunden, wobei sie mit ihren Schalenrändern 11 stumpf aneinander stoßen. Zwischen den Meßkammern 1 ist eine beispielsweise aus Metall bestehende, kreisförmige, ebene Trennwand 13 angeordnet, die an ihrem Rand eine im Querschnitt U-förmige, aus gummielastischem, gasbeständigem Material bestehende Ringdichtung 14 trägt. Bei montiertem Gasbalgenzähler liegt die Ringdichtung 14 auf dem Absatz 12 dichtend auf.

Die Membran 2 weist kreisringförmige Gestalt auf, ist leicht gewölbt und besteht vorzugsweise aus einem geölten, gasdichten Leder bzw. aus gewebeverstärktem Kunststoff.

Der kreisförmige Membranteller 3 weist einen Ring von senkrecht zu seiner Oberfläche stehenden Nasen 15 auf, von welchen jede mit einem nach außen weisenden Haken 16 versehen ist. Auf seiner gegenüberliegenden Seite trägt der Membranteller 3 zwei Ösen 17, mit deren Hilfe er am Schwenkarm 6 schwenkbar eingehängt ist; hierzu weist der gabelförmig ausgebildete Schwenkarm 6 an seinen Enden zwei in die Ösen 17 eingreifende Steckstifte auf.

Die Membran 2 sitzt mit ihrem Membran-Innenrand 18 auf dem Ring der Nasen 15 und ist dort mittels des Halteringes 4 festgehalten. Hierzu ist der Haltering 4 über die Haken 16 gestreift und er wird von diesen am Membranteller 3 festgeklemmt, wobei die Membran 2 zwischen Membranteller 3 und Haltering 4 liegt und gasdicht angedrückt wird. Membranteller 3 und Haltering 4 können aus einem geeigneten Kunststoff hergestellt sein.

Der Klemmring 5 aus Kunststoff ist konisch ausgebildet. Er ist auf seiner der Trennwand 13 zugewandten Seite mit einer Anzahl von Stegen 21 versehen, damit ihn das Gas vollständig umspülen kann, und auf seiner der Membran 2 zugekehrten Seite ist ein Druckrand 22 angeformt. Der Durchmesser des Klemmringes 5 ist geringfügig kleiner als die lichte Weite der Schale.

Der Klemmring 5 dient zum gasdichten Anklemmen des Außenrandes 19 der Membran 2 an der Auflageschulter 10 der Meßkammer 1. Zu diesem Zwecke ist der Durchmesser der Membran 2 gerade soviel größer als die lichte Weite der Meßkammer 1, daß der Außenrand 19 der Membran 2 um den Rand des Klemmringes 5 um 90 Grad umgelegt werden kann. Der Klemmring 5 sitzt nach erfolgter Montage im - zylindrischen - Meßraum 20 der Meßkammer 1 (während der Schwenkarm 6 im - konischen - Meßraum 23 sitzt). Die Höhe des Klemmringes 5 ist so bemessen, daß nach erfolgter Montage die Stege 21 auf der Trennwand 13 aufstehen und der Klemmring 5 die Membran 2 gegen die Auflageschulter 10 drückt.

Der an die Meßkammer 1 angeformte Schieberstutzen 7 enthält drei dicht nebeneinander liegende Kanäle, nämlich einen in der Mitte liegenden Ausgangskanal 24 sowie einen zum - konischen - Meßraum 23 führenden Verbindungskanal 25 sowie einen zum - zylindrischen - Meßraum 20 führenden Verbindungskanal.

Der Schieberstutzen 7 weist eine besonders bearbeitete, ebene Gleitfläche 26 auf, auf welcher sich der Muschelschieber 8 hin-und her bewegt und abwechselnd die beiden Verbindungskanäle mit dem Ausgangskanal 24 verbindet.

Die Austrittsöffnungen 27 der Ausgangskanäle 24 für das abströmende Gas sind so angeordnet, daß sie gegeneinander gerichtet sind. Ein angesetzter T-Stutzen (nicht dargestellt) führt durch das Gehäuse des Gasbalgenzählers hindurch nach außen.

R 3297/85-EU

*8*

## Zusammenstellung der verwendeten Bezugsziffern

| | | | |
|---|---|---|---|
| 1 | Meßkammern | 24 | Ausgangskanal |
| 2 | Membran | 25 | Verbindungskanal |
| 3 | Membranteller | 26 | Gleitfläche |
| 4 | Haltering | 27 | Austrittsöffnungen |
| 5 | Klemmring | | |
| 6 | Schwenkarm | | |
| 7 | Schieberstutzen | | |
| 8 | Muschelschieber | | |
| 9 | Schwenkwelle | | |
| 10 | Auflageschulter | | |
| 11 | Schalenrand (von 1) | | |
| 12 | Absatz (an 11) | | |
| 13 | Trennwand | | |
| 14 | Ringdichtung (von 13) | | |
| 15 | Nasen | | |
| 16 | Haken (von 15) | | |
| 17 | Ösen (an 3) | | |
| 18 | Membran-Innenrand | | |
| 19 | Außenrand (von 2) | | |
| 20 | Meßraum (zylindrisch) | | |
| 21 | Stege (von 5) | | |
| 22 | Druckrand | | |
| 23 | Meßraum (konisch) | | |

0158939

R 3297/85-EU

Patentansprüche

1. Gasbalgenzähler mit zwei kreiszylindrischen, durch eine kreisförmige Trennwand voneinander getrennten Meßkammern, die an ihren Innenseiten jeweils eine kreisförmige Auflageschulter aufweisen, an welchen jeweils eine an einem Membranteller befestigte Membran mit ihrem Außenrand mittels eines Klemmrings angepreßt ist, sowie mit einem an den Membrantellern angreifenden und mit einem Zählwerk gekoppelten Hebelsystem und einer von diesem betätigten Schiebersteuerung mit zwei Muschelschiebern, die sich über den Mündungen von in die Meßkammern führenden Kanälen für das zu- und abströmende Gas hin- und herbewegen, d a d u r c h   g e k e n n z e i c h n e t ,   daß die beiden Meßkammern (1) jeweils die Form einer niederen, kreiszylindrischen Schale besitzen, daß die beiden Meßkammern (1) an ihren Schalenrändern (11) stumpf aneinanderstoßend lösbar miteinander verbunden sind, daß die Trennwand (13) zwischen den beiden Meßkammern (1) an den Schalenrändern (11) beiderseits abdichtend aufsitzt, daß der Klemmring (5) konisch ausgebildet ist und an seiner der Trennwand (13) zugewandten Seite Stege (21) aufweist, die auf der Trennwand (13) aufliegen.

0158939

2. Gasbalgenzähler nach Anspruch 1, d a d u r c h
g e k e n n z e i c h n e t , daß die Trennwand (13)
an ihrem Rand eine im Querschnitt U-förmige Ringdichtung (14) trägt.

3. Gasbalgenzähler nach Anspruch 1 oder 2, d a -
d u r c h g e k e n n z e i c h n e t , daß die
Membran (2) einen kreisförmigen Innenrand (18) aufweist,
daß von der Oberfläche des Membrantellers (3) Nasen (15)
abstehen, die einen Ring bilden, auf welchem der Membran-
Innenrand (18) sitzt, daß jede Nase (15) einen zum
Membran-Innenrand (18) weisenden Haken (16) aufweist,
und daß zur Befestigung der Membran (2) ein über die
Haken (16) streifbarer Haltering (4) vorgesehen ist.

FIG. 5
0158939

0158939

Nummer der Anmeldung

## EUROPÄISCHER RECHERCHENBERICHT

| | EINSCHLÄGIGE DOKUMENTE | | EP 85104139.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - A1 - 2 756 163</u> (KROMSCHRÖDER)<br>* Fig. 5 * | 1 | G 01 F 3/22 |
| D,A | <u>GB - A - 1 334 842</u> (PARKINSON)<br>* Fig. 1,2 * | 1 | |
| A | <u>GB - A - 438 473</u> (PARKINSON)<br>* Fig. 1,3; Seite 3, Zeilen 18-61 * | 1 | |

| RECHERCHIERTE SACHGEBIETE (Int. Cl.4) |
|---|
| G 01 F 3/00 |

Der vorliegende Recherchenbericht wurde für alle Patentansprüche erstellt.

| Recherchenort | Abschlußdatum der Recherche | Prüfer |
|---|---|---|
| WIEN | 04-07-1985 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03 82